# EUROPEAN PATENT APPLICATION

(11) **EP 2 645 471 A1**
(43) Date of publication of application: **02.10.2013**
(21) Application number: 11842714.5
(22) Date of filing: 21.11.2011
(51) Int. Cl.: H01P 1/04, F16B 2/06, F16B 2/10, F16B 7/04, H01P 3/127

(54) **WAVEGUIDE COUPLING**

(30) Priority: 24.11.2010 JP 2010260788
(71) Applicant: Furukawa Communication And Broadcasting Co., Ltd., Yamato-shi, Kanagawa 242-0018 (JP); Furukawa Electric Co., Ltd., Chiyoda-ku Tokyo 100-8322 (JP)
(72) Inventor: SAITO, Tetsuji, Yamato-shi Kanagawa 242-0018 (JP); TANAKA, Yasumasa, Yamato-shi Kanagawa 242-0018 (JP); SAKAGUCHI, Masatsugu, Yamato-shi Kanagawa 242-0018 (JP); SHIGEMATSU, Takashi, Yamato-shi Kanagawa 242-0018 (JP)
(74) Representative: Horn Kleimann Waitzhofer
(86) International application number: PCT/JP2011/076816
(87) International publication number: WO 2012/070536

(57) **Abstract**

The present invention is aimed at providing a waveguide coupling that enables two waveguides to be easily connected together while aligning cross sections of the two waveguides to hold central axes ofthe two waveguides concentrically with high accuracy. A coupling (1) is for use in connecting two waveguides (2, 3) in an axial direction. The coupling (1) includes a continuous body (10) and a ring member (20). The continuous body (10) is used to surround in a circumferential direction a connecting portion connecting the two waveguides (2, 3). The continuous body (10) includes seven partitioning bodies (10a to 10e, 11a, 11b) hinged at six portions by gudgeons (12) to become continuous, and the partitioning bodies (11a, 11b) of end portions are connected together with screws (30), whereby the continuous body (10) is formed annularly. The ring member (20) has an annular shape, is disposed along a circumference of the waveguide (2), and is connected to the continuous body (10) by screws (40).

## Description

### TECHNICAL FIELD OF THE INVENTION

The present invention relates to couplings suitable for use in connecting waveguides, especially waveguides for use in supplying energy (millimeter wave, high-power, high-frequency) for plasma heating to a nuclear fusion reactor.

### BACKGROUND ART

There are cases in which waveguides are used to transmit high frequency electromagnetic waves. A waveguide is a hollow tube with a circular or rectangular cross section, and electromagnetic waves propagate in a specific electromagnetic distribution (mode). Waveguides are used, for example, to supply energy for use in nuclear fusion in a nuclear fusion reactor.

When used, waveguides are connected together according to a transmission line of electromagnetic waves. When waveguides are connected together, it is required to maintain linearity and concentricity, because a connection loss is generated when, for example, central axes of the waveguides are not concentric or cross sections of the waveguides deviate from one another depending on the form of connection at connecting portions. Furthermore, in a case of transmission of a large amount of power, since a connection loss may cause erosion of a waveguide, higher accuracy of concentricity and the like of connecting portions of waveguides is required.

As to connection of waveguides, a structure is known in which end portions of waveguides have flanges screwed together. There is also known a technique in which end portions of waveguides are butted and this connecting portion is surrounded by a coupling including two halved bodies to thereby connect the waveguides. For example, Figure 32 of Patent Document 1 illustrates an example in which the foregoing coupling is used to connect waveguides for a circuit for supplying power to an antenna.

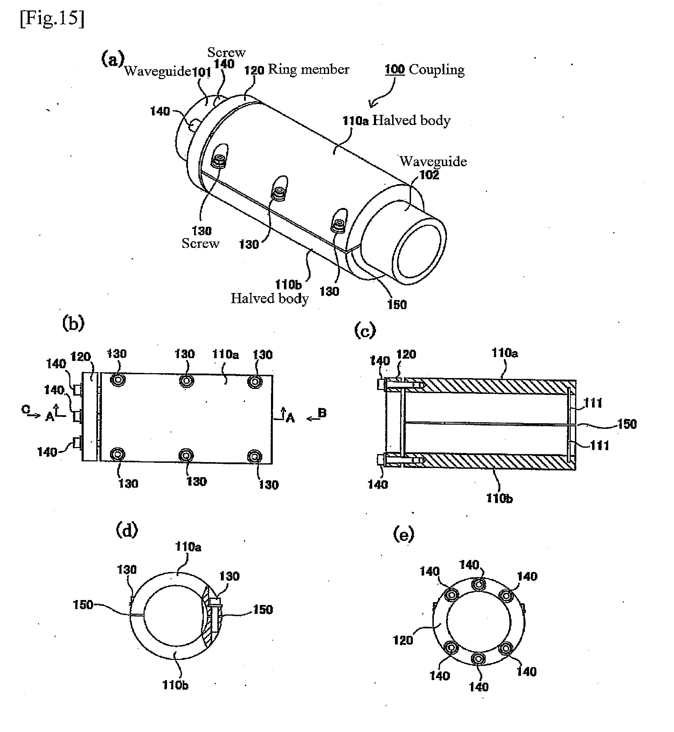

The present inventors studied the use of the foregoing coupling including two halved bodies to connect waveguides for a nuclear fusion reactor. Figure 15 illustrates a conventional coupling 100. Figure 15(a) is a perspective view of the coupling 100. Figure 15(b) is a top view of the coupling 100 illustrated in Figure 15(a). Figure 15(c) is a cross sectional view along the line A-A indicated in Figure 15(b). Figure 15(d) is a view of the coupling 100 in the direction B in Figure 15(b). Figure 15(e) is a view of the coupling 100 in the direction C in Figure 15(b). In Figure 15(d), a cross section of the coupling 100 in a radial direction is partially illustrated.

As illustrated in Figure 15(a) and elsewhere, the coupling 100 is disposed to cover connecting portion of cylindrical waveguides 101 and 102, whereby the waveguides 101 and 102 are connected together such that cross sections of the waveguides 101 and 102 in the radial direction are aligned and the positions of the waveguides 101 and 102 in the axial direction are fixed. The coupling 100 includes half-cylindrical halved bodies 110a and 110b, an annular ring member 120 and other members.

As illustrated in Figures 15(b) and 15(d) and elsewhere, while end surfaces of the halved bodies 110a and 110b along the axial direction are positioned to face each other, end portions of the halved bodies 110a and 110b are tightened with screws 130, whereby the halved bodies 110a and 110b form a cylindrical shape. Then, as illustrated in Figures 15(c) and 15(e) and elsewhere, the ring member 120 is connected to one end surface of the halved bodies 110a and 110b in the axial direction with screws 140.

Further, as illustrated in Figure 15(c), each of the other end portions of the halved bodies 110a and 110b in the axial direction has a groove 111. A C-shaped ring (not illustrated) is provided along a circumference of the waveguide 102, which is one of the waveguides to be connected. When the waveguides 101 and 102 are connected together, the C-shaped ring engages into the groove 111 to thereby fix the position of the waveguide 102 in the axial direction.

Further, a C-shaped ring (not illustrated) is also provided along a circumference of the waveguide 101, which is the other one of the waveguides to be connected. When the waveguides 101 and 102 are connected together, the C-shaped ring is sandwiched between the ring member 120 and the halved bodies 110a and 110b as the ring member 120 is tightened to the halved bodies 110a and 110b by the screws 140, whereby the position of the waveguide 101 in the axial direction is fixed.

The circumferences of the waveguides 101 and 102 are surrounded by the coupling 100, which overall has a cylindrical shape, and the halved bodies 110a and 110b are connected by the screws 130 to tighten and hold the waveguides 101 and 102. It is to be noted that end surfaces of the waveguides 101 and 102 to be connected are cut to reduce the outer diameters. At the time of connecting the waveguides 101 and 102 together, an O-shaped ring (not illustrated) is provided to diameter reduced portions (not illustrated) of both end surfaces for vacuum sealing.

The coupling 100 described above makes it possible to connect the waveguides 101 and 102 together by fixing the positions of the waveguides 101 1 and 102 in the axial direction while aligning cross sections of the waveguides 101 and 102 in the radial direction to hold central axes of the waveguides 101 and 102 concentrically.

Patent Document 2 discloses a coupling using halved bodies in which side portions of the halved bodies on one side are hinged.

### BACKGROUND ART DOCUMENT

### PATENT DOCUMENT

[Patent Document 1] Japanese Patent Publication No. 2007-228223 A
[Patent Document 2] Japanese Patent Publication No. H09-307302 A

### SUMMARY OF THE INVENTION

### TECHNICAL PROBLEM

In the direction in which the halved bodies 110a and 110b are joined together (for example, longitudinal direction in Figure 15(d)), the waveguides 101 and 102 are held by the tightening screws 130 and firmly fixed by the coupling 100. However, in the direction orthogonal to that (for example, lateral direction in Figure 15(d)), it is not possible to avoid formation of slight gaps between the coupling 100 and the waveguides 101 and 102 due to tolerance required in production of the halved bodies 110a and 110b and the waveguides 101 1 and 102 or processing accuracy, or a combination thereof. This may cause an misalignment of axes of the waveguides 101 and 102.

Further, the screws 130 are tightened while the distance between the halved bodies 110a and 110b, i.e., the sizes of two gaps 150 and 150 between both end surfaces of the halved body 110a and both end surfaces of the halved body 110b, is managed. However, excessive tightening may cause the waveguides 101 and 102 to be distorted and crushed in the direction in which the halved bodies 110a and 110b are joined together.

Furthermore, when the waveguides 101 and 102 are connected together by the coupling 100, as the ring member 120 is tightened, the waveguide 101 to which the C-shaped ring is attached is slightly moved relatively in the axial direction (for example, rightward in Figure 15(c)). At this time, if the holding strength of the halved bodies 110a and 110b is too strong, it is difficult for the waveguide 101 to move. Hence, while the ring member 120 is tightened, adjustments , such as loosening the screws 130 tightening the halved bodies 110a and 110b as appropriate, are made. However, as described above, since both sides of the halved bodies 110a and 110b are connected together by the screws 130, management of the gaps 150 and 150 therebetween is necessary. Accordingly, skilled work has been required to tighten the ring member 120.

The present invention is in view of the above problems and is aimed at providing a waveguide coupling that enables two waveguides to be connected easily while aligning cross sections of the waveguides to hold central axes of the waveguides concentrically with high accuracy.

### TECHNICAL SOLUTION

To achieve the above object, a first aspect of the invention is directed to a waveguide coupling for use in connecting two waveguides in an axial direction, the coupling comprising: a continuous body for surrounding a connection section connecting two waveguides in a circumferential direction of the waveguide, wherein the continuous body includes: N (N is an integer of 3 or greater) partitioning bodies; N-1 connecting portions for connecting the partitioning bodies that are adjacent; and an end connecting portion for connecting the partitioning bodies of both end portions among the N partitioning bodies connected by the N-1 connecting portions to form the N partitioning bodies annulary.

In the above structure, the waveguides are surrounded and held by the continuous body including three or more partitioning bodies connected together. This enables the partitioning bodies to evenly tighten and hold the waveguides from every direction. Thus, the conventional problems of couplings including halved bodies can be overcome such as possibility of concentration of the holding direction, and misalignment of axes of waveguides due to tolerance required in production or processing accuracy and the like. Hence, the waveguides can firmly be held in a balanced manner from every direction while misalignment of axes of the waveguides and crushing of the waveguides are prevented. Furthermore, since the above structure only requires to connect the end portions of one continuous body, the number of connecting members such as screws can be reduced. Further, when adjustment of tightening by a connecting member is made at the end portion connecting portion, the holding strength of the waveguides is uniformly changed in the circumferential direction of the waveguides. This facilitates adjustment while preventing misalignment of axes of the waveguides and the like. Thus, workability is improved.

Preferably, the partitioning bodies that are adjacent are hinged at the connecting portions. This makes it possible to open the continuous body more widely than the outer diameter of the waveguides and then close the continuous body such that the continuous body comes into close contact with the entire waveguides in the circumferential direction. Thus, the continuous body can be wound around the waveguides with ease.

The waveguides are, for example, circular corrugated waveguides for high-power, high-frequency transmission. Circular corrugated waveguides for high-power, high-frequency transmission for use in a nuclear fusion reactor or the like are required to be connected without, especially, misalignment of axes. Thus, use of the waveguide coupling according to the present invention is significantly advantageous.

Preferably, the continuous body further includes an even number of contacting portions to be in contact with the waveguides, the even number of contacting portions being disposed at equal intervals in the circumferential direction of the waveguides and symmetrically about center of cross sections of the waveguides in a radial direction. This makes it possible to hold the waveguides in a balanced manner from every direction without distorting the circular cross sections of the waveguides. It also becomes possible to eliminate portions other than the contacting portions to reduce the weight and costs. It is to be noted that it is especially desirable to have six contacting portions.

Preferably, the waveguide coupling according to the present invention further includes a plurality of end portion members to be disposed annularly along a circumference of each of the two waveguides to be connected, the plurality of end portion members each having an arc-shaped inner periphery; and a joining member for joining the end portion members of corresponding positions that are disposed at the respective two waveguides to be connected such that a distance in the axial direction of the waveguides is adjustable, wherein the end portion members include a positioning section for positioning the waveguides in the axial direction. This makes it possible to prevent misalignment of the positions of the waveguides in the axial direction with respect to the coupling. Furthermore, since the positions of the waveguides in the axial direction can be fixed by the end portion members independently from the positioning of the cross sections of the waveguides in the radial direction by the continuous body, the burden of adjustment at the time of connecting the waveguides can be reduced.

Preferably, the positioning section is a protrusion to be engaged with a groove formed in a circumference of each of the two waveguides to be connected, the positioning section being provided to the inner periphery of each of the end portion members. This makes it possible to reliably prevent misalignment of the positions of the waveguides in the axial direction with respect to the coupling by engaging the protrusion with the groove of the waveguides.

Preferably, the waveguide coupling according to the present invention further includes a positioning section for positioning the waveguides in the axial direction with a positioning member provided to each of the two waveguides to be connected. This makes it possible to prevent misalignment of the positions of the waveguides in the axial direction with respect to the coupling.

Preferably, the positioning member is a C-shaped ring attached along the circumference of each of the waveguides; and the positioning section includes: a groove with which the C-shaped ring attached to one of the waveguides is to be engaged, the groove being formed in an inner surface of one end portion of the continuous body; and a ring member for sandwiching the C-shaped ring attached to another one of the waveguides between the ring member and another end portion of the continuous body, the ring member having an annular shape. This makes it possible to reliably prevent misalignment of the positions of the waveguides in the axial direction.

Preferably, side portions of the partitioning bodies that are adjacent are hinged at the connecting portions, and the hinged side portions have a screw hole for screwing the ring member. This makes it possible to obtain strength of hinged portions and strength of screwed portions at the same time. For example, the side portions of the partitioning bodies to be hinged are formed to be thick, and the thick portions are used as portions to be screwed, whereby strength can be obtained.

Preferably, the side portions of the partitioning bodies of both end portions corresponding to the end connecting portion are formed to extend in the radial direction of the waveguides when the continuous body is wound around the waveguides. This makes it possible to connect the end portions of the continuous body at a side of the waveguides to facilitate tightening with screws and the like.

### ADVANTAGEOUS EFFECT OF THE INVENTION

The present invention can provide a waveguide coupling that enables two waveguides to be connected easily while aligning cross sections of the waveguides to hold central axes of the waveguides concentrically with high accuracy.

### BRIEF DESCRIPTION OF THE DRAWINGS

[Figure 1] A perspective view illustrating a coupling 1.
[Figure 2] A lateral view illustrating the coupling 1.
[Figure 3] A view illustrating a continuous body 10.
[Figure 4] A view illustrating the continuous body 10 in an axial direction.
[Figure 5] A view illustrating a ring member 20 in an axial direction.
[Figure 6] A cross sectional view illustrating the coupling 1.
[Figure 7] A view illustrating how waveguides 2 and 3 are connected by the coupling 1.
[Figure 8] A perspective view illustrating a coupling 60.
[Figure 9] A lateral view illustrating the coupling 60.
[Figure 10] A view illustrating a continuous body 70.
[Figure 11] A view illustrating end portion members 80a and 80b.
[Figure 12] A cross sectional view illustrating the coupling 60.
[Figure 13] A view illustrating how waveguides 2 and 3 are connected by the coupling 60.
[Figure 14] A view illustrating a continuous body 90.
[Figure 15] A view illustrating a coupling 100.

### EMBODIMENTS

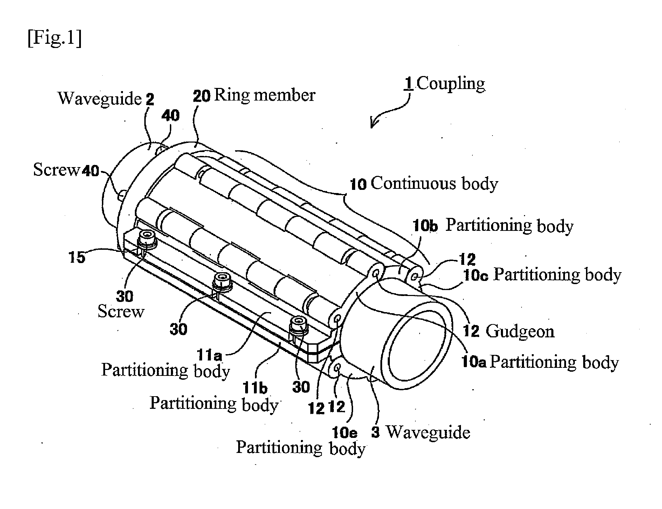

The following describes waveguide couplings according to embodiments of the present invention with reference to drawings. First, a waveguide coupling according to a first embodiment will be described with reference to Figures 1 to 7.

### [First embodiment]

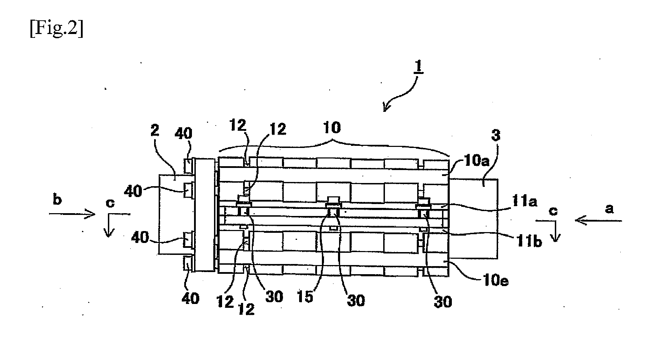

First, a structure of a coupling 1, which is the waveguide coupling according to the first embodiment, will be described with reference to Figures 1 and 2. Figure 1 is a perspective view illustrating waveguides 2 and 3 connected with the coupling 1. Figure 2 is a lateral view.

As illustrated in Figures 1 and 2, the coupling 1 includes a continuous body 10, a ring member 20 and so on.

The continuous body 10 includes N partitioning bodies formed by dividing at N portions in the circumferential direction of the waveguides 2 and 3 and connected by hinging at N-1 dividing portions to become continuous. N is an integer of 3 or greater, because, as described above, in a case of two partitioning bodies, problems such as concentration of the holding direction may arise. The continuous body 10 of the present embodiment includes seven partitioning bodies 10a to 10e, 11a, and 11b formed by dividing at seven portions in the circumferential direction of the waveguides 2 and 3 and connected by hinging at six dividing portions to become continuous.

The continuous body 10 is wound around the waveguides 2 and 3, each of which is a cylindrical tube, along the circumferential direction to surround connecting portions at which the waveguides 2 and 3 are connected in the axial direction, and the partitioning bodies 11a and 110b of end portions (corresponding to the remaining one portion that is not hinged of the dividing portions described above) are connected together by screws 30, whereby the continuous body 10 is formed into a cylinder (annularly).

The ring member 20 is an annular member. The ring member 20 is engaged with the circumference of the waveguide 2 and connected by screws 40 to an end surface of the continuous body 10 wound in the shape of a cylinder.

The coupling 1 has the foregoing structure so that the cross sections of the waveguides 2 and 3 in the radial direction are aligned to hold the central axes of the waveguides 2 and 3 concentrically while fixing the positions of the waveguides 2 and 3 in the axial direction.

The waveguides 2 and 3 are circular corrugated waveguides for high-power, high-frequency transmission for use in a nuclear fusion reactor. As illustrated in enlarged scale in Figure 5(c), the circular corrugated waveguides each have a microfabricated inner wall in which many ringshaped grooves 51 along a surface orthogonal to the axial direction of the waveguides are formed in the axial direction such that protrusions 50 are formed in the shape of teeth of a comb along the entire length. In a case of supplying energy for plasma heating to a nuclear fusion reactor, the circular corrugated waveguides allow high-power, high-frequency (for example, 40 GHz to 170 GHz) transmission in HE11 mode.

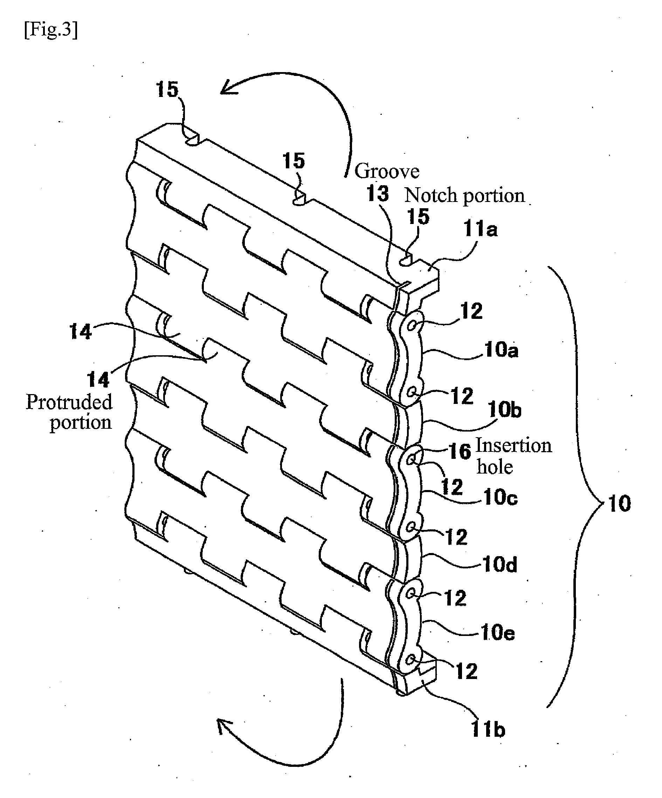

Next, the continuous body 10 will be described with reference to Figure 3. Figure 3 is a view illustrating a state of the continuous body 10 before being wound around the waveguides 2 and 3. The continuous body 10 is wound along the circumferential direction of the waveguides 2 and 3 in the direction indicated by an arrow in Figure 3. As illustrated in Figure 3, the continuous body 10 includes plate-shaped partitioning bodies 10a to 10e, 11a, and 11b such that adjacent partitioning bodies are hinged by gudgeons 12 to thereby become continuous. The hinge axial direction corresponds to the axial direction of the waveguides 2 and 3.

In the continuous body 10, the partitioning bodies 11a and 11b are disposed at end portions along the direction orthogonal to the hinge axial direction (longitudinal direction in Figure 3), and partitioning bodies 10a to 10e are disposed between the partitioning bodies 11a and 11b. Hereinafter, the direction in which the partitioning bodies 10a to 10e, 11a, and 11b are disposed will be referred to as the winding direction. The winding direction corresponds to the circumferential direction of the waveguides 2 and 3.

Side portions of each of the partitioning bodies 10a to 10e in the winding direction are hinged with a side portion of an adjacent partitioning body in the winding direction. Only one side portion of each of the partitioning bodies 11a and 11b in the winding direction is hinged with a side portion of the adjacent partitioning body 10a or 10e in the winding direction. The other side portion of each of the partitioning bodies 11a and 110b forms an extending portion, which extends from the partitioning body 11a or 11b. As illustrated in Figure 1 and elsewhere, the extending direction corresponds to the radial direction of the waveguides 2 and 3 around which the continuous body 10 is wound. Further, the extending portion of the partitioning body 11a includes notch portions 15 for connection by the screws 30. The extending portion of the partitioning body 11b includes hole portions (not illustrated) for screwing at positions corresponding to the notch portions 15. As illustrated in Figure 1 and elsewhere, when the waveguides 2 and 3 are connected together, the extending portions are positioned laterally to the waveguides 2 and 3, and the partitioning bodies 11a and 11b are connected together by the screws 30 at the extending portions.

One end portion of the continuous body 10 in the hinge axial direction includes a groove 13 across the partitioning bodies 10a to 10e, 11a, and 11b in the winding direction. As described below, the groove 13 is used to position the waveguide 3 in the axial direction.

The side portions of the partitioning bodies 10a to 10e, 11a, and 11b to be hinged have protruded portions 14. The protruded portions 14 are disposed at predetermined intervals in the hinge axial direction and protrude in the winding direction. The position of each protruded portion 14 of one of the partitioning bodies that are adjacent in the winding direction corresponds to each portion of the other one of the partitioning bodies where no protruded portion 14 is provided, whereby the protruded portions 14 of the partitioning bodies of the adj acent partitioning bodies are engaged with one another.

Each of the protruded portions 14 has an insertion hole 16 in the hinge axial direction into which the gudgeon 12 is to be inserted. The insertion hole 16 is formed in the protruded portions 14 disposed to align in the hinge axial direction such that the positions of cross sections correspond to each other. The gudgeon 12 is inserted into the insertion hole 16 of each of the protruded portions 14, whereby the partitioning bodies that are adjacent to each other in the winding direction are hinged.

Further, the protruded portions 14 are substantially cylindrical and formed to be thicker than the remaining part of the partitioning body.

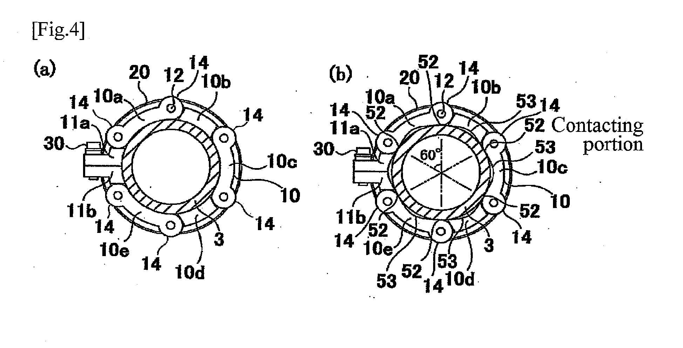

Figure 4(a) illustrates the continuous body 10 viewed in the direction indicated a in Figure 2 when the waveguides 2 and 3 illustrated in Figure 2 are connected by the coupling 1. As illustrated in Figure 4(a), in the present embodiment, when the continuous body 10 is wound around the waveguides 2 and 3 along the circumferential direction, the seven partitioning bodies 10a to 10e, 11a, and 11b joined by six gudgeons 12 are in contact with the waveguides 2 and 3 to hold the waveguides 2 and 3 with even strength in every direction.

As illustrated in Figure 4(a), each partitioning body may be in contact with the waveguides 2 and 3 with the almost entire width along the circumferential direction of the waveguides 2 and 3, but the present invention is not limited thereto. For example, only a predetermined contacting portion of the partitioning body may be in contact with the waveguides 2 and 3.

Figure 4(b) illustrates an example in which the contacting portions 52 are the protruded portions 14 of each partitioning body, which are formed to be thick and have the gudgeons 12. Specifically, a portion 53 of each partitioning body other than the contacting portions 52 (protruded portions 14) is depressed outward in the radial direction of the waveguides 2 and 3 and formed thinner than that in Figure 4(a). When the continuous body 10 is would around the circumference of the waveguides 2 and 3, only the contacting portions 52 (protruded portions 14) are in contact with the waveguides 2 and 3, and the remaining portion is not in contact with the waveguides 2 and 3.

When only the contacting portions 52 are in contact with the waveguides 2 and 3, the contacting portions 52 are disposed as appropriate according to the purpose such as holding cross sections of the waveguides 2 and 3 in the radial direction in a balanced manner to prevent misalignment of axes. In the present embodiment, for example, as illustrated in Figure 4(b), six contacting portions 52 (protruded portions 14) are disposed at equal intervals (60° interval) and symmetrically about the center of cross sections of the waveguides 2 and 3 in the radial direction.

It is to be noted that when the contacting portions are disposed at even-numbered portions of four or more at equal intervals, multiple pairs of contacting portions are disposed 180-degree symmetrically about the center of cross sections of the waveguides 2 and 3 in the radial direction. Thus, multiple portions holding the waveguides 2 and 3 in the radial direction are disposed in a balanced manner. This makes it possible to prevent distortion of the waveguides and misalignment of axes.

When the contacting portions are not disposed at equal intervals, the direction in which holding force is applied may be biased. Further, when two contacting portions are disposed, even if the two contacting portions are disposed at even intervals, concentrated holding force may be applied in one direction to cause problems such as misalignment of axes and distortion of the waveguides 2 and 3.

Increasing the contacting portions leads to a rise in production costs. Hence, in view of a balance between the advantageous effect described above and production costs, it is especially preferable to dispose six contacting portions at equal intervals and symmetrically about the center of cross sections of the waveguides 2 and 3 as in the present embodiment.

On the other hand, from the viewpoint of holding the waveguides 2 and 3 in a balanced manner from every direction, an odd-numbered contacting portions of three or more may be disposed at equal intervals along the waveguides 2 and 3 in the circumferential direction.

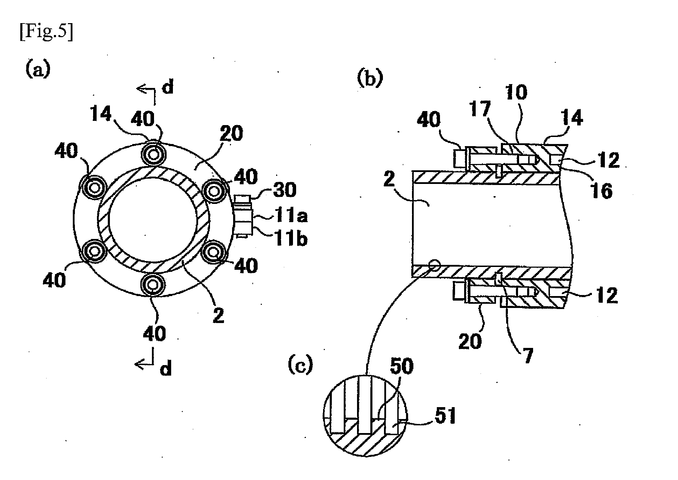

Figure 5 is a view illustrating the ring member 20. Figure 5(a) illustrates the coupling 1 in Figure 2 viewed in the direction indicated b in Figure 2. Figure 5(b) is a cross sectional view along the line indicated d-d in Figure 5(a).

As illustrated in Figures 5(a) and 5(b), the ring member 20 is connected to an end surface of the continuous body 10 by the screws 40. As illustrated in Figure 5(b), the positions ofthe screws 40 correspond to the protruded portions 14 of the partitioning bodies 10a to 10e. The protruded portions 14 positioned at end portion of the ring member 20 side have screw holes 17. When the waveguides 2 and 3 are connected together, the screws 40 are tightened into the screw holes 17 to screw the ring member 20 to the continuous body 10.

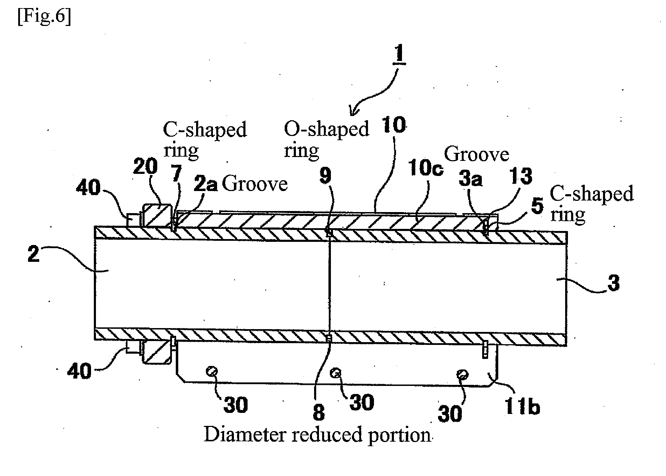

Figure 6 illustrates a cross section along line indicated c-c in Figure 2. As illustrated in Figure 6, when connected by the coupling 1, the waveguides 2 and 3 are disposed such that the cross sections in the radial direction are aligned.

Further, the circumference of the waveguide 3 has a groove 3a. The groove 3a is formed at a position in the axial direction corresponding to the position of the groove 13 formed in one end portion of the continuous body 10. The C-shaped ring 5 is attached to the groove 3a. The circumference of the waveguide 2 has a groove 2a. The groove 2a is formed at a position in the axial direction corresponding to a portion between the other end portion of the continuous body 10 and the ring member 20. The C-shaped ring 7 is attached to the groove 2a.

When the waveguides 2 and 3 are connected together, the C-shaped ring 5 is engaged with the groove 13 formed in one end portion of the continuous body 10, and the C-shaped ring 7 is sandwiched between the end surface of the other end portion of the continuous body 10 and the ring member 20 screwed to the end surface, whereby the positions of the waveguides 2 and 3 in the axial direction are fixed. Specifically, the C-shaped rings 5 and 7 are positioning members for positioning the waveguides 2 and 3 and the coupling 1, and the groove 13 and the ring member 20 play a role as positioning sections for positioning the waveguides 2 and 3.

Further, the circumference of an end of each of the waveguides 2 and 3 that is to be connected is cut to reduce the outer diameter so that when the waveguides 2 and 3 are butted together, a diameter reduced portion 8 is formed. An O-shaped ring 9 for vacuum sealing is disposed on the diameter reduced portion 8 to allow the waveguides 2 and 3 to be connected while a vacuum state in the waveguides 2 and 3 is maintained.

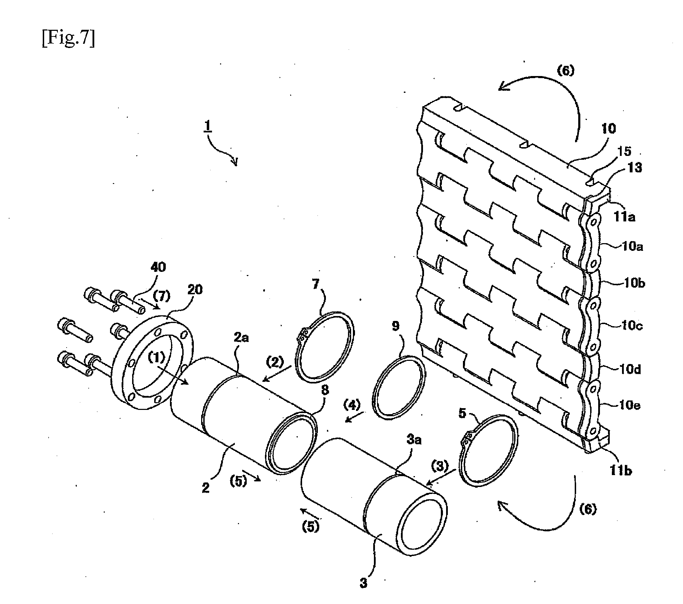

Next, how the waveguides 2 and 3 are connected by the coupling 1 will be described with reference to Figure 7.

The waveguides 2 and 3 are connected using the coupling 1 as follows. (1) First, the ring member 20 is engaged along the circumference of the waveguide 2 to be disposed on the side of the groove 2a opposite to the waveguide 3. (2) The C-shaped ring 7 is engaged with the groove 2a. (3) The C-shaped ring 5 is engaged with the groove 3a.

(4) Then, while the O-shaped ring 9 is disposed along the diameter reduced portion 8 formed at the end surfaces of the waveguides 2 and 3 to be connected, (5) the end surfaces of the waveguides 2 and 3 are aligned and closely disposed.

(6) Thereafter, the continuous body 10 is wound around the waveguides 2 and 3 with aligning the position of the groove 13 formed in one end portion of the continuous body 10 with the position of the C-shaped ring 5. At this time, the other end portion of the continuous body 10 is positioned at the side of C-shaped ring 7 closer to the waveguide 3. Then, as illustrated in Figure 1 and elsewhere, the partitioning bodies 11a and 11b at the end portion of the continuous body 10 are connected together with the screws 30. (7) Then, the ring member 20 is tightened to the continuous body 10 with the screws 40. At this time, the waveguide 2 is moved slightly in the axial direction to cause the end surface to come into contact with the end surface of the waveguide 3, and the C-shaped ring 7 is sandwiched between the continuous body 10 and the ring member 20. When the screw 40 is tightened, adjustments are made as necessary such as loosening the screws 30 to allow the waveguide 2 to move. At this time, the waveguides 2 and 3 are hermetically sealed by the O-shaped ring 9.

As described above, the waveguides 2 and 3 are connected together using the coupling 1 as illustrated in Figure 1 and elsewhere.

As the foregoing describes, the waveguide coupling according to the present embodiment holds the waveguides 2 and 3 such that the continuous body 10 including seven partitioning bodies 10a to 10e, 11a, and 11b hinged together is wound around the waveguides 2 and 3. This makes it possible to open the continuous body 10 more widely than the outer diameters of the waveguides 2 and 3 and then close the continuous body 10 so as to surround the entire waveguides 2 and 3 in the circumferential direction. This enables the partitioning bodies to evenly tighten and hold the waveguides 2 and 3 from every direction. Thus, the conventional problems of couplings including halved bodies , such as possibility of concentration of the holding direction or formation of gaps due to tolerance required in production that may cause misalignment of axes of the waveguides 2 and 3, can be overcome. And it becomes possible to hold the waveguides 2 and 3 in a balanced manner from every direction and misalignment of axes of the waveguides 2 and 3 and crushing of the waveguides 2 and 3 are prevented. Furthermore, since the above structure only requires to connect both end portions of one continuous body 10, the number of connecting members such as screws can be reduced. Further, when adjustment of tightening of the continuous body 10 is made at one portion along the circumferential direction, the holding strength of the waveguides 2 and 3 is uniformly changed in the circumferential direction. This facilitates, for example, positioning of the waveguides 2 and 3 in the axial direction, alignment of the axes of the waveguides 2 and 3, and adjustment of holding strength of the waveguides 2 and 3 at the time of connecting the ring member 20 and the like. Thus, workability is improved.

It is especially preferable to use the waveguide coupling according to the present embodiment to connect circular corrugated waveguides for high-power, high-frequency transmission. The waveguides 2 and 3 are not limited to corrugated waveguides. However, since circular corrugated waveguides for high-power, high-frequency transmission for use in a nuclear fusion reactor and the like are required to be connected without misalignment of axes, it is significantly advantageous to use the waveguide coupling according to the present embodiment.

Further, as described above with reference to Figure 4(b), when the continuous body 10 includes the contacting portions 52, which are disposed at 60-degree intervals in the circumferential direction and are in contact with the waveguides 2 and 3 at six portions, the waveguides 2 and 3 can be firmly heldin a balanced manner from every direction without distorting the circular cross sections of the waveguides 2 and 3 while eliminating portions other than the contacting portions to reduce the weight and cost of the coupling 1. Furthermore, the point that less processing accuracy of the portions other than the contacting portions 52 is required compared with the case in which the entire width of the partitioning bodies is in contact with the waveguides 2 and 3 is also suitable.

Further, the coupling 1 according to the present embodiment includes the ring member 20, which has a annular shape and is disposed along the circumference of the waveguide 2, and uses the C-shaped rings 5 and 7 attached along the circumferences of the waveguides 2 and 3 as positioning members. An inner surface of one end portion of the continuous body 10 has a groove 13 (positioning section) with which the C-shaped ring 5 attached to one waveguide 3 is to be engaged. The C-shaped ring 7 attached to other waveguide 2 is sandwiched between the other end portion of the continuous body 10 and the ring member 20 (positioning section) in the axial direction of the waveguide 2 by screwing the ring member 20 to the continuous body 10. The positioning members are not limited to the C-shaped rings 5 and 7, and the positioning sections are not limited to the groove 13 and the ring member 20. The positioning members and the positioning sections may be determined as appropriate for positioning the waveguides 2 and 3 in the axial direction. For example, each of the coupling 100 and the waveguide 3 may have a structure including depressions and protrusions engaging with each other to replace the positioning members and the positioning sections. However, the above structure can reliably prevent misalignment of the positions of the waveguides 2 and 3 in the axial direction.

Further, in the coupling 1 according to the present embodiment, the ring member 20 is screwed to the continuous body 10 with the screws 40 at positions in the cross section in the radial direction that correspond to the screw holes 17 formed in the side portions of the partitioning bodies that are hinged. This makes it possible to obtain strength of hinged portions and strength of screwed portions at the same time. For example, the partitioning bodies may be formed to have thick portions at the positions of the gudgeons 12, and the thick portions may be used as portions to be screwed, whereby strength is obtained.

Further, in the coupling 1 according to the present embodiment, one side portion of each of the partitioning bodies 11a and 11b, which are not hinged, extends in the radial direction of the waveguides 2 and 3, and the side portions are tightened with the screws 30. This enables easy tighten work at latetal of the waveguides 2 and 3.

### [Second embodiment]

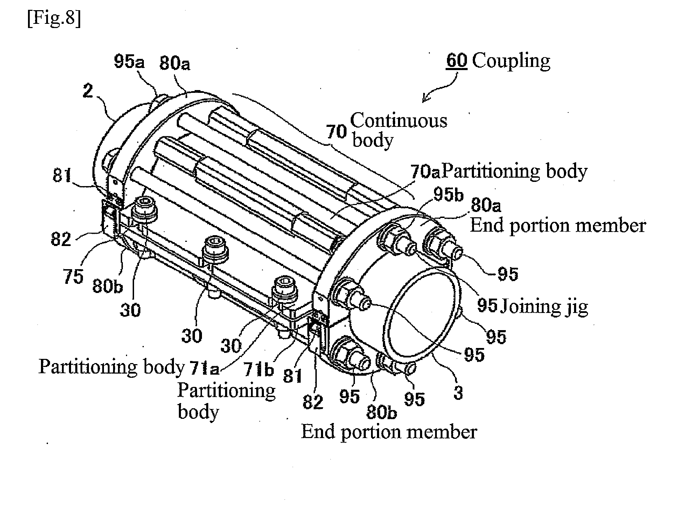

The following describes a waveguide coupling according to a second embodiment, with reference to Figures 8 to 13. In the second embodiment, mainly points that are different from the first embodiment will be described. Components that are similar to those of the first embodiment are given the same reference numerals in the drawings and elsewhere to omit description of the components.

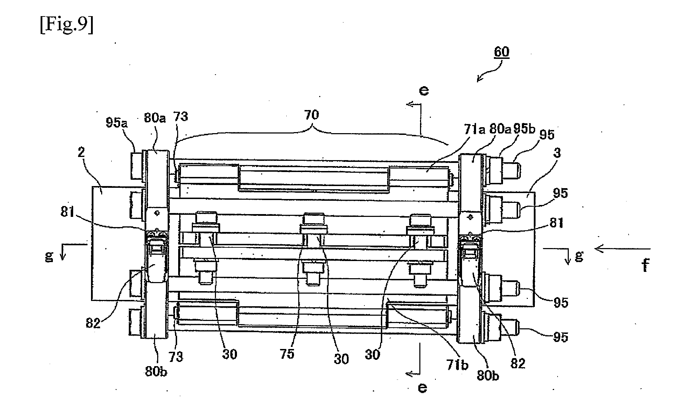

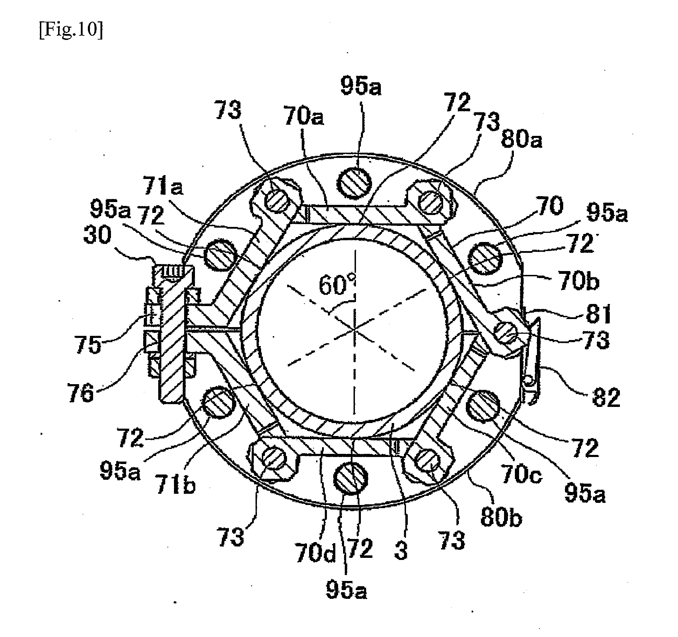

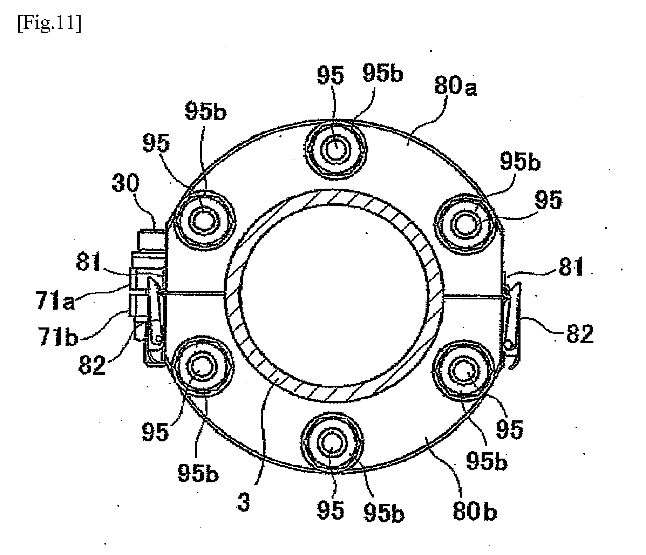

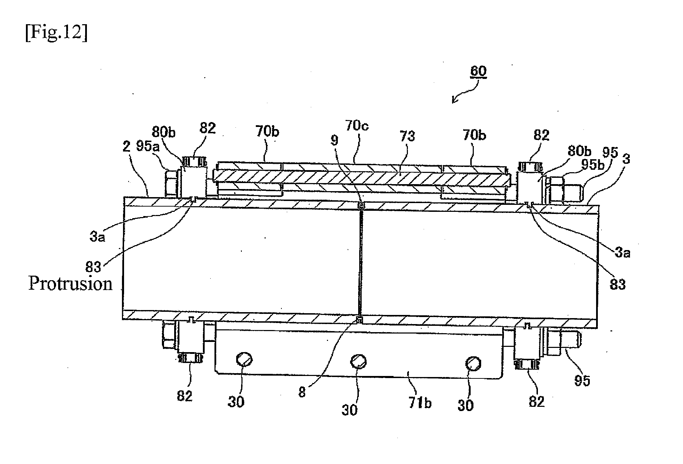

First, the structure of a coupling 60, which is a waveguide coupling according to the second embodiment, will be described with reference to Figures 8 to 12. Figure 8 is a perspective view illustrating a state of waveguides 2 and 3 connected by the coupling 60 according to the second embodiment. Figure 9 is a lateral view. Figure 10 is a view of a cross section along the line indicated e-e in Figure 9. Figure 11 is a view of the coupling 60 in Figure 9 viewed from the direction indicated f in Figure 9. Figure 12 is a view of a cross section along the line indicated g-g in Figure 9.

As illustrated in Figures 8 and 9, the coupling 60 according to the second embodiment includes a continuous body 70, end portion members 80a and 80b and so on.

The continuous body 70 is different from the continuous body 10 of the first embodiment in the following points. As illustrated in Figure 10 and elsewhere, the continuous body 70 has a structure in which six partitioning bodies 70a to 70d, 71a, and 71b, which are formed by dividing at six portions along the circumferential direction of the waveguides 2 and 3, are hinged at five dividing portions by gudgeons 73. A surface of each of the partitioning bodies 70a to 70d, 71a, and 71b on the waveguide side is formed to be flat. Furthermore, the grooves 13 in the first embodiment are not formed.

The continuous body 70 is wound around the waveguides 2 and 3 in the circumferential direction, and the partitioning bodies 71a and 71 b at end portions are connected together by inserting the screws 30 into notch portions 75 formed in an extending portion of the partitioning body 71a and hole portions 76 for screwing formed in an extending portion ofthe partitioning body 71b. Thereby a central portion of each ofthe partitioning bodies 70a to 70d, 71a, and 71b in the width direction becomes a contacting portion 72 to be in contact with the waveguides 2 and 3. In the continuous body 70, the six contacting portions 72 are disposed at equal intervals (60° interval) along the circumferential direction of the waveguides 2 and 3 and symmetrically about the center ofthe cross sections ofthe waveguides 2 and 3 in the radial direction. The contacting portions 72 hold the waveguides 2 and 3 with even strength in every direction so that the cross sections ofthe waveguides 2 and 3 in the radial direction are aligned to maintain the central axes concentrically, thereby preventing misalignment of axes.

As illustrated in Figure 11 and elsewhere, the end portion members 80a and 80b are half-circular members. The end portion members 80a and 80b are disposed along the circumferences of the waveguides 2 and 3 with aligning the end portions in the circumferential direction of the end portion members 80a and 80b. When a hook 82 provided to the end portion member 80b is hooked on a catching section 81 provided to the end portion member 80a, the end portion members 80a and 80b are engaged with the circumferences of the waveguides 2 and 3 annularly.

Further, as illustrated in Figure 8 and elsewhere, the positions in the circumferential direction of the waveguides 2 and 3 of the end portion member 80a to be engaged with the waveguide 2 and the end portion member 80a to be engaged with the waveguide 3 correspond and a joining jig 95 connects the pair. The end portion member 80b has the same structure.

The joining jig 95 includes a bolt 95a and a nut 95b. The bolt 95a is inserted in bolt holes (not illustrated) formed in both end portion members 80a from the side of one end portion member 80a, and the nut 95b is tightened from the side of another end portion members 80a to thereby connect the pair of end portion members 80a and 80a. The pair of end portion members 80b and 80b are also connected in the same manner. A distance between the pair of end portion members can be adjusted by tightening the nut 95b.

Further, as illustrated in Figure 12, arc-shaped inner peripheries of the end portion members 80a and 80b each have protrusions 83. When the waveguides 2 and 3 are connected together, the protrusions 83 are engaged with the groove 2a of the circumference of the waveguide 2 and the groove 3a of the circumference of the waveguide 3. In the present embodiment, the protrusions 83 play a role as a positioning section for positioning the waveguides 2 and 3 in the axial direction, This makes it possible to reliably fix the positions of the waveguides 2 and 3 in the axial direction.

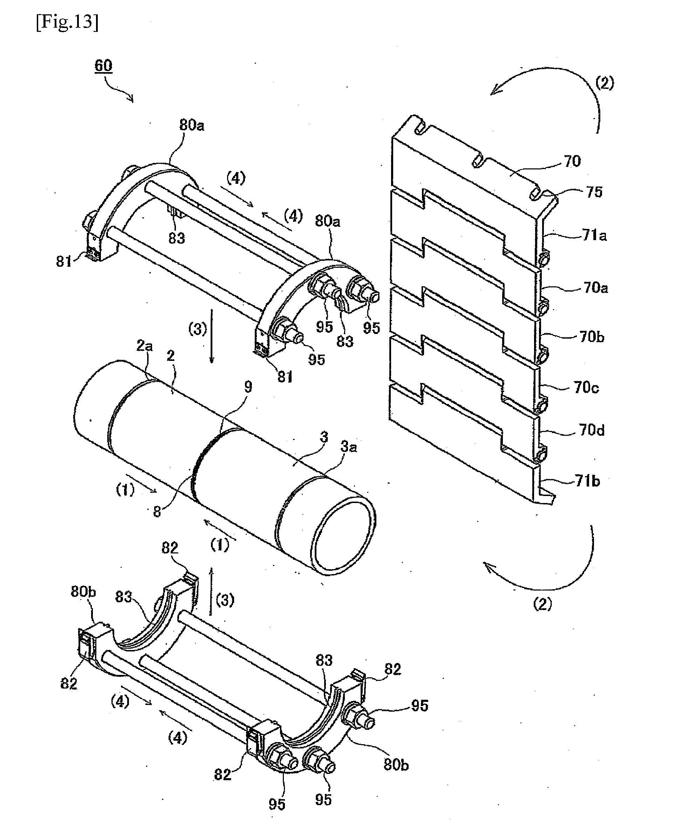

Next, how the waveguides 2 and 3 are connected by the coupling 60 will be described with reference to Figure 13.

The waveguides 2 and 3 are connected together by the coupling 60 as follows. (1) First, while the O-shaped ring 9 is disposed along the diameter reduced portion 8 of end surfaces of the waveguides 2 and 3 to be connected, the end surfaces of the waveguides 2 and 3 are aligned and closely disposed.

(2) Next, the continuous body 70 is wound around the waveguides 2 and 3. Then, as described above, the partitioning bodies 71a and 71b at the end portions of the continuous body 70 are connected loosely with the screws 30 to prevent dropping.

(3) Then, the pair of end portion members 80a and 80a and the pair of end portion members 80b and 80b connected in advance with the joining jig 95 are attached such that the end portion members 80a and 80b are disposed annularly along the circumferences of the waveguides 2 and 3 at both sides of the continuous body 70. At this time, as described above, the protrusions 83 are engaged with the grooves 2a and 3 a of the waveguides 2 and 3, and the hook 82 of the end portion member 80b is hooked on the catching section 81 of the end portion member 80a and fixed. It is to be noted that the pair of end portion members 80a and 80a and the pair of end portion members 80b and 80b may be connected by the joining jig 95 after the end portion members 80a and 80b are disposed on the waveguides 2 and 3.

(4) Thereafter, the nut 95b of the joining jig 95 is tightened. This creates axial force to reduce distances between the pair of end portion members 80a and 80a and the pair of end portion members 80b and 80b, and the waveguides 2 and 3 are moved in the axial direction to bring the end surfaces into contact with each other. At this time, the positions of the waveguides 2 and 3 in the axial direction are fixed while the O-shaped ring 9 is slightly distorted to hermetically seal the waveguides 2 and 3. Furthermore, when the screws 30 of the continuous body 70 are tightened, the waveguides 2 and 3 are held and fixed by the continuous body 70, and the cross sections of the waveguides 2 and 3 in the radial direction are aligned to hold central axes of the waveguides 2 and 3 concentrically

As the foregoing describes, the waveguides 2 and 3 are connected together by the coupling 60 as illustrated in Figure 8, and the coupling 60 according to the second embodiment can attainthe same advantageous effect as that attained by the first embodiment.

Furthermore, in the second embodiment, the cross sections of the waveguides 2 and 3 in the radial direction are aligned to hold the central axes concentrically by use of the continuous body 70, and the positions of the waveguides 2 and 3 in the axial direction are fixed using the end portion members 80a and 80b. In the first embodiment, the cross sections of the waveguides 2 and 3 in the radial direction are aligned and the position in the axial direction is fixed using the continuous body 10. Thus, tightening in the axial direction may cause misalignment of the cross sections in the radial direction, or tightening of the cross sections in the radial direction may cause misalignment of the position in the axial direction. In such cases, while the misalignment is adjusted finely as appropriate, the cross sections in the radial direction are aligned and the position in the axial direction is fixed to connect the waveguides 2 and 3. In the second embodiment, as described above, the cross sections of the waveguides 2 and 3 in the radial direction are aligned independently by the continuous body 70, and the position in the axial direction is fixed independently by the end portion members 80a and 80b. This reduces the burden of fine adjustment.

It is to be noted that although the second embodiment describes that the end portion members 80a and 80b are half-circular members and the two end portion members 80a and 80b are joined together and disposed annularly around the waveguides 2 and 3, the shape of each end portion member is not limited to the above described shape, and each end portion member may have an inner periphery with an arc shape formed by dividing a circle. This makes it possible to join a plurality of end portion members together and dispose them annularly along the circumferences of the waveguides 2 and 3. Further, the joining jig 95 is not limited to including the bolt 95a and the nut 95b, and any joining jig can be employed that is capable of connecting a pair of end portion members at corresponding positions such that a distance can be adjusted. There are various possible structures.

As the foregoing describes, the present invention can provide a waveguide coupling that enables two waveguides to be easily connected while aligning cross sections of the waveguides to hold central axes of the waveguides concentrically with high accuracy.

Although the foregoing describes preferred embodiments of the present invention such as waveguide coupling with reference to the attached drawings, the present invention is not limited to the described examples. For example, the waveguide coupling according to the present invention can also be used to connect waveguides other than the circular corrugated waveguides 2 and 3 described as examples in the embodiments. It should be apparent to those skilled in the art that various changes and modifications are possible within the technical scope disclosed in this application, and it is to be understood that the changes and modifications are automatically encompassed.

For example, the structure of the continuous body 10 and so on described with reference to Figure 3 and elsewhere makes it possible to maintain high strength of hinged portions while each partitioning body is allowed to be rotatable about a hinge shaft. However, a method of hinging partitioning bodies is not limited to the foregoing method, and any structure can be employed that allows each partitioning body to be rotatable about a hinge shaft. For example, a gudgeon may be provided to a part of each partitioning body in the hinge axial direction. Further, the hinging structure may be realized by rotatably engaging side portions of adjacent partitioning bodies.

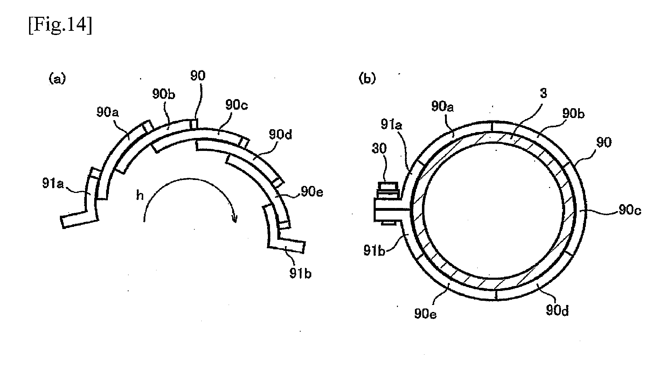

Further, a method of connecting partitioning bodies is not limited to hinging. For example, as illustrated in Figure 14(a), a continuous body 90 may have a structure in which partitioning bodies 90a to 90e, 91a, and 9 1 b are slidably connected. As the arrow indicated h, the continuous body 90 can spread by sliding the partitioning bodies and cover the waveguides 2 and 3. And then side portions of adjacent partitioning bodies are locked and fixed by a locking mechanism (not illustrated), and the partitioning bodies 91a and 91 b at end portions are connected with the screws 30 as described above, whereby the continuous body 90 is wound around the waveguides 2 and 3 as illustrated in Figure 14(b).

In this way, the structure of continuous body may be any structure in which three or more partitioning bodies are connected, and there are various possible structures. Further, methods of connecting partitioning bodies at end portions, the ring member 20 of the first embodiment, and the end portion members 80a and 80b of the second embodiment are not limited to those using the screws 30, the screws 40, or the hook 82. It is to be noted, however, that connection with screws or hooks is advantageous in that it is easy to adjust the tightness and to fix the positions.

### EXPLANATION OF REFERENCE NUMERALS

1, 60, 100·········Coupling
2, 3, 101, 102·········Waveguide
5,7·········C-shaped ring
8·········Diameter reduced portion
9·········O-shaped ring
10, 70, 90·········Continuous body
10a to 10e, 11a, 11b, 70a to 70d, 71a, 71b, 90a to 90e, 91a, 91b·········Partitioning body
12·········Gudgeon
13·········Groove
14·········Protruded portion
15·········Notch portion
20·········Ring member
30, 40, 130, 140·········Screw
80a, 80b·········End portion member
95·········Joining jig
110a, 110b·········Halved body

## Claims

1. A waveguide coupling for connecting two waveguides in an axial direction, the coupling comprising:
a continuous body for surrounding a connection section connecting two waveguides in a circumferential direction of the waveguide,
wherein the continuous body includes:
N partitioning bodies, wherein N is an integer of 3 or greater;
N-1 connecting portions for connecting the partitioning bodies that are adjacent; and
an end connecting portion for connecting the partitioning bodies of both end portions among the N partitioning bodies connected by the N-1 connecting portions to form the N partitioning bodies annularly.

2. The waveguide coupling of claim 1, wherein the partitioning bodies that are adjacent are hinged at the connecting portions.

3. The waveguide coupling of any one of claims 1 and 2, wherein the two waveguides to be connected are circular corrugated waveguides for high-power, high-frequency transmission.

4. The waveguide coupling of any one of claims 1 to 3, wherein the continuous body further includes an even number of contacting portions to be in contact with the waveguides, the even number of contacting portions being disposed at equal intervals in the circumferential direction of the waveguides and symmetrically about center of cross sections of the waveguides in a radial direction.

5. The waveguide coupling of any one of claims 1 to 4, further comprising:
a plurality of end portion members to be disposed annularly along a circumference of each of the two waveguides to be connected, the plurality of end portion members each having an arc-shaped inner periphery; and
a joining member for joining the end portion members of corresponding positions that are disposed at the respective two waveguides to be connected such that a distance in the axial direction of the waveguides is adjustable,
wherein the end portion members include a positioning section for positioning the waveguides in the axial direction.

6. The waveguide coupling of claim 5, wherein the positioning section is a protrusion to be engaged with a groove formed in a circumference of each of the two waveguides to be connected, the positioning section being provided to the inner periphery of each of the end portion members.

7. The waveguide coupling of any one of claims 1 to 4, further comprising a positioning section for positioning the waveguides in the axial direction with a positioning member provided to each of the two waveguides to be connected.

8. The waveguide coupling of claim 7, wherein:
the positioning member is a C-shaped ring attached along the circumference of each of the waveguides; and
the positioning section includes:
a groove with which the C-shaped ring attached to one of the waveguides is to be engaged, the groove being formed in an inner surface of one end portion of the continuous body; and
a ring member for sandwiching the C-shaped ring attached to another one of the waveguides between the ring member and another end portion of the continuous body, the ring member having an annular shape.

9. The waveguide coupling of claim 8, wherein side portions of the partitioning bodies that are adjacent are hinged at the connecting portions, and the hinged side portions have a screw hole for screwing the ring member.

10. The waveguide coupling of any one of claims 1 to 9, wherein the side portions ofthe partitioning bodies of both end portions corresponding to the end connecting portion are formed to extend in the radial direction ofthe waveguides when the continuous body is wound around the waveguides.
